# FASCICULE DE BREVET EUROPEEN

(11) **EP 4 422 940 B1**
(45) Date de publication et mention de la délivrance du brevet: **18.06.2025**
(21) Numéro de dépôt: 22789958.0
(22) Date de dépôt: 26.09.2022
(51) Int. Cl.: B60W 30/16, B60W 50/00

(54) **FILTRAGE ADAPTATIF DE LA VITESSE DU VÉHICULE CIBLE POUR UNE RÉGULATION ADAPTATIVE DE LA VITESSE DU VÉHICULE PORTEUR**
ADAPTIVE FILTERUNG DER GESCHWINDIGKEIT EINES ZIELFAHRZEUGS ZUR ADAPTIVEN GESCHWINDIGKEITSREGELUNG DES TRÄGERFAHRZEUGS
ADAPTIVE FILTERING OF THE SPEED OF THE TARGET VEHICLE FOR ADAPTIVE CRUISE CONTROL OF THE CARRIER VEHICLE

(30) Priorité: 27.10.2021 FR 2111387
(43) Date de publication de la demande: 04.09.2024
(73) Titulaire: Stellantis Auto SAS, 78300 Poissy (FR)
(72) Inventeur: KAHALE, Elie, 92360 Meudon (FR); HECKETSWEILER, Thierry, 90800 Bavilliers (FR)
(74) Mandataire: ESIP
(86) Numéro de dépôt international: PCT/FR2022/051803
(87) Numéro de publication internationale: WO 2023/073294

(56) Documents cités:
- DE-A1- 102018 004 027
- US-A1- 2017 015 321
- US-A1- 2019 143 971

## Description

La présente invention a trait aux dispositifs d'aide à la conduite d'un véhicule automobile, et plus particulièrement aux régulateurs de vitesse adaptatifs et aux véhicules automobiles équipés de tels dispositifs.

Un régulateur de vitesse adaptatif (plus connu sous le nom anglais « Adaptive Cruise Control» ou ACC) ajuste automatiquement la vitesse du véhicule porteur en fonction d'une vitesse de référence et une distance inter-véhicule (ou, de manière équivalente, un temps inter-véhicule) de référence entre le véhicule porteur et le véhicule qui le précède sur la même voie de circulation utilisé comme véhicule cible. Ainsi, en présence d'un véhicule cible, la régulation de la vitesse du véhicule porteur est directement liée à la vitesse du véhicule cible. Le régulateur de vitesse adaptatif reproduit, en effet, fidèlement toutes les variations de la vitesse du véhicule cible tant qu'elle est inférieure à la vitesse de référence du véhicule porteur.

Il en résulte que des faibles oscillations de la vitesse du véhicule cible (notamment, lorsque qu'il est en conduite manuelle) engendre également sensiblement ces mêmes oscillations de la vitesse du véhicule porteur. Un inconvénient majeur d'un tel comportement du régulateur de vitesse adaptatif est qu'il dégrade le confort dynamique du véhicule porteur. Le conducteur du véhicule porteur ne remarque pas réellement les faibles ralentissements/accélérations du véhicule cible, mais ressent clairement ceux de son véhicule.

En outre, l'état de la technique est connu des documents US2019/143971A1 et DE102018004027 A1.

Un objet de la présente invention est de pallier au moins en partie les inconvénients précités.

A cet effet, il est proposé, en premier lieu, un régulateur de vitesse adaptatif pour réguler la vitesse d'un premier véhicule automobile, ce régulateur de vitesse adaptatif étant apte à déterminer la vitesse d'un deuxième véhicule automobile circulant devant le premier véhicule automobile sur une même voie de circulation et dans un même sens de circulation, le régulateur de vitesse adaptatif comprenant un calculateur configuré pour
- calculer le gradient de la différence entre la vitesse du deuxième véhicule automobile et la vitesse du premier véhicule automobile ;
- lisser la vitesse déterminée du deuxième véhicule automobile avec un coefficient de lissage associé au gradient calculé, le régulateur de vitesse adaptatif étant configuré pour réguler la vitesse du premier véhicule automobile par rapport à la vitesse lissée.

Il est proposé, en deuxième lieu, une méthode de régulation adaptative de la vitesse d'un premier véhicule automobile comprenant les étapes suivantes:
- détermination de la vitesse d'un deuxième véhicule automobile circulant devant le premier véhicule automobile sur une même voie de circulation et dans un même sens de circulation;
- calcul du gradient de la différence entre la vitesse du deuxième véhicule automobile et la vitesse du premier véhicule automobile ;
- lissage de la vitesse déterminée du deuxième véhicule automobile avec un coefficient de lissage associé au gradient calculé;
- régulation de la vitesse du premier véhicule automobile par rapport à la vitesse lissée.

Diverses caractéristiques supplémentaires peuvent être prévues, seules ou en combinaison :
- le coefficient de lissage est décroissant en fonction dudit gradient de sorte qu'un lissage associé à un gradient inférieur en valeur absolue à une première valeur seuil soit supérieur à un lissage associé à un gradient supérieur en valeur absolue à ladite première valeur seuil ;
- lorsque le gradient calculé est supérieur en valeur absolue à une deuxième valeur seuil prédéfinie, le coefficient de lissage est choisi de sorte que la vitesse lissée soit sensiblement égale à la vitesse déterminée du deuxième véhicule automobile ;
- le coefficient de lissage est défini par une fonction affine par intervalle prédéfinie dudit gradient ;
- le calculateur est configuré pour lisser la vitesse déterminée du deuxième véhicule automobile par un limiteur de gradient.

Il est proposé, en troisième lieu, un véhicule automobile comprenant le régulateur de vitesse adaptatif présenté ci-dessus.

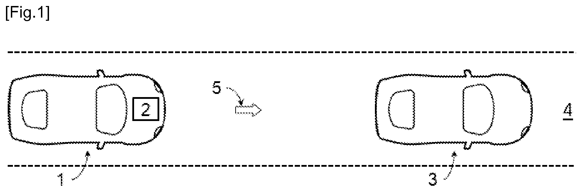

D'autres caractéristiques et avantages de l'invention apparaîtront plus clairement et de manière concrète à la lecture de la description ci-après de modes de réalisation, laquelle est faite en référence à la figure [Fig.1] qui illustre schématiquement un véhicule automobile pourvu d'un régulateur de vitesse adaptatif selon divers modes de réalisation.

En se référant à la figure **1****,** il est affiché un régulateur de vitesse adaptatif **2** équipant un premier véhicule **1** automobile (aussi dit véhicule **1** porteur, véhicule hôte ou égo-véhicule).

Ce régulateur de vitesse adaptatif **2** est apte à détecter la vitesse d'un deuxième véhicule **3** automobile (véhicule **3** cible) circulant devant le premier véhicule **1** automobile sur la même voie **4** de circulation et dans le même sens **5** de circulation. Pour cela, le régulateur de vitesse adaptatif **2** comprend un capteur (notamment, un radar, une caméra, un laser, ou un lidar frontal, ou un module de communication véhiculaire de type véhicule-à-véhicule) apte à détecter la présence du véhicule **3** cible et à déterminer la distance inter-véhicule et la vitesse de ce véhicule **3** cible.

Afin de limiter l'impact des oscillations/fluctuations à faible magnitude de la vitesse du véhicule **3** cible sur la régulation longitudinale de la vitesse du véhicule **1** porteur, le régulateur de vitesse adaptatif **2** comprend un calculateur configuré pour réaliser un filtrage adaptatif en fonction de la dynamique du véhicule **3** cible. Ce filtrage adaptatif vise à atténuer les faibles oscillations de la vitesse du véhicule **3** cible pour qu'elles ne soient pas prises en considération par le régulateur de vitesse adaptatif **2** dans sa régulation de la vitesse du véhicule 1 porteur. La vitesse du véhicule **1** porteur est de la sorte asservie sur la vitesse filtrée du véhicule **3** cible.

Pour cela, le calculateur du régulateur de vitesse adaptatif **2** est configuré pour
- calculer le gradient de la vitesse relative du véhicule **3** cible par rapport au véhicule 1 porteur, cette vitesse relative étant la différence entre la vitesse du véhicule **3** cible est la vitesse du véhicule **1** porteur ;
- lisser la vitesse du véhicule **3** cible avec un coefficient de lissage (c.à.d. un niveau de filtrage ou un taux d'atténuation) associé au gradient de la vitesse relative.

Le calculateur du régulateur de vitesse adaptatif **2** filtre, en effet, la vitesse du véhicule **3** cible en fonction du gradient de sa vitesse relative. Le gradient désigne ici le taux de variation par unité de temps de la vitesse relative du véhicule **3** cible. Dans un mode de réalisation, le calculateur applique un filtre lisseur (ou un filtre de lissage) ou tout autre opérateur ou fonction de lissage permettant de lisser (adoucir ou réduire les variations) la vitesse du véhicule **3** cible avec un coefficient de lissage prédéfini. Ce filtre de lissage est, par exemple, un limiteur de gradient (plus connu sous le nom anglais «gradient limiter » ou « rate limiter »). Le régulateur de vitesse adaptatif **2** est configuré pour réguler la vitesse du véhicule **1** porteur par rapport à la vitesse lissée du véhicule **3** cible.

Le coefficient de lissage est associé au gradient de la vitesse relative du véhicule **3** cible de façon à s'adapter aux valeurs des oscillations à éliminer/filtrer. Dans un mode de réalisation, le coefficient de lissage est décroissant en fonction du gradient de la vitesse relative de sorte qu'un lissage associé à un gradient inférieur en valeur absolue à une première valeur seuil soit supérieur (c.à.d. plus important) à un lissage associé à un gradient supérieur en valeur absolue à cette première valeur seuil. Le calculateur filtre la vitesse du véhicule **3** cible par un filtre de lissage dépendant du gradient de la vitesse relative de sorte que le lissage soit fort pour les gradients faibles et faible (voire inexistant ou nul) pour les gradients forts.

Le coefficient de lissage est fonction du gradient de la vitesse relative de façon
- à filtrer au maximum les oscillations de la vitesse du véhicule **3** cible lorsque le gradient de sa vitesse relative est faible, c.à.d. inférieur en valeur absolue à une première valeur seuil prédéfinie (par exemple, un taux de variation ou un gradient compris en valeur absolue entre 0 km/h et 4 km/h). Un tel filtrage permet, avantageusement, d'améliorer le confort dynamique du véhicule **1** porteur ;
- à ce que la vitesse lissée soit, lorsque le gradient de la vitesse relative est supérieur en valeur absolue à une deuxième valeur seuil prédéfinie (par exemple, un taux de variation au-delà de 10 km/h), sensiblement égale à la vitesse déterminée du véhicule **3** cible (non lissée). Autrement dit, le coefficient de lissage est choisi, lorsque le gradient de la vitesse relative est estimé important, de façon à inhiber le filtrage de la vitesse du véhicule **3** cible. Ceci permet, avantageusement, de préserver la réactivité du régulateur de vitesse adaptatif **2** par rapport à une situation dynamique du véhicule **3** cible traduite par un gradient important de sa vitesse relative (par exemple, lorsque le véhicule **3** cible freine).

Dans un autre mode de réalisation, le calculateur du régulateur de vitesse adaptatif **2** est configuré pour moduler le coefficient de lissage (ou le niveau de filtrage) de la vitesse du véhicule **3** cible en fonction de l'intervalle du gradient de la vitesse relative (par exemple, un gradient compris en valeur absolue entre 0 et 4 km/h, entre 4 et 10 km/h ou supérieur à 10 km/h). Plus généralement, le coefficient de lissage est, dans un mode de réalisation, défini par une fonction affine par intervalle du gradient de la vitesse relative.

Tel qu'il est associé au gradient de la vitesse relative, le coefficient de lissage rend, avantageusement, le régulateur de vitesse adaptatif **2** moins réactif aux faibles oscillations de la vitesse du véhicule **3** cible de façon à gagner en confort dans le véhicule **1** porteur, sans toutefois dégrader sa réactivité à des situations dynamiques du véhicule **3** cible.

## Revendications

1. Régulateur de vitesse adaptatif **(2)** pour réguler la vitesse d'un premier véhicule **(1)** automobile, ce régulateur de vitesse adaptatif **(2)** étant apte à déterminer la vitesse d'un deuxième véhicule **(3)** automobile circulant devant le premier véhicule **(1)** automobile sur une même voie **(4)** de circulation et dans un même sens **(5)** de circulation, le régulateur de vitesse adaptatif **(2)** étant **caractérisé en ce qu'**il comprend un calculateur configuré pour
- calculer le gradient de la différence entre la vitesse du deuxième véhicule **(3)** automobile et la vitesse du premier véhicule **(1)** automobile ;
- lisser la vitesse déterminée du deuxième véhicule **(3)** automobile avec un coefficient de lissage associé au gradient calculé, le régulateur de vitesse adaptatif **(2)** étant configuré pour réguler la vitesse du premier véhicule **(1)** automobile par rapport à la vitesse lissée.

2. Régulateur de vitesse adaptatif **(2)** selon la revendication précédente,
**caractérisé en ce que** le coefficient de lissage est décroissant en fonction dudit gradient de sorte qu'un lissage associé à un gradient inférieur en valeur absolue à une première valeur seuil soit supérieur à un lissage associé à un gradient supérieur en valeur absolue à ladite première valeur seuil.

3. Régulateur de vitesse adaptatif **(2)** selon la revendication 1 ou 2,
**caractérisé en ce que** lorsque le gradient calculé est supérieur en valeur absolue à une deuxième valeur seuil prédéfinie, le coefficient de lissage est choisi de sorte que la vitesse lissée soit sensiblement égale à la vitesse déterminée du deuxième véhicule **(3)** automobile.

4. Régulateur de vitesse adaptatif **(2)** selon l'une quelconque des revendications précédentes, **caractérisé en ce que** le coefficient de lissage est défini par une fonction affine par intervalle prédéfinie dudit gradient.

5. Régulateur de vitesse adaptatif **(2)** selon l'une quelconque des revendications précédentes, **caractérisé en ce que** le calculateur est configuré pour lisser la vitesse déterminée du deuxième véhicule **(3)** automobile par un limiteur de gradient.

6. Méthode de régulation adaptative de la vitesse d'un premier véhicule **(1)** automobile comprenant les étapes suivantes:
- détermination de la vitesse d'un deuxième véhicule **(3)** automobile circulant devant le premier véhicule **(1)** automobile sur une même voie **(4)** de circulation et dans un même sens **(5)** de circulation;
- calcul du gradient de la différence entre la vitesse du deuxième véhicule **(3)** automobile et la vitesse du premier véhicule **(1)** automobile ;
- lissage de la vitesse déterminée du deuxième véhicule **(3)** automobile avec un coefficient de lissage associé au gradient calculé;
- régulation de la vitesse du premier véhicule **(1)** automobile par rapport à la vitesse lissée.

7. Méthode selon la revendication précédente, **caractérisée en ce que** le coefficient de lissage est décroissant en fonction dudit gradient de sorte qu'un lissage associé à un gradient inférieur en valeur absolue à une première valeur seuil soit supérieur à un lissage associé à un gradient supérieur en valeur absolue à ladite première valeur seuil.

8. Méthode selon la revendication 6 ou 7, **caractérisée en ce que** lorsque le gradient est supérieur à une deuxième valeur seuil prédéfinie, le coefficient de lissage est choisi de sorte que la vitesse lissée soit sensiblement égale à la vitesse déterminée du deuxième véhicule **(3)** automobile.

9. Méthode selon l'une quelconque des revendications 6 à 8,
**caractérisée en ce que** le coefficient de lissage est défini par une fonction affine par intervalle prédéfinie dudit gradient.

10. Véhicule **(1)** automobile comprenant un régulateur de vitesse adaptatif **(2)** selon l'une quelconque des revendications 1 à 5.

## Patentansprüche

1. Adaptiver Geschwindigkeitsregler (2) zum Regeln der Geschwindigkeit eines ersten Kraftfahrzeugs (1), wobei der adaptive Geschwindigkeitsregler (2) die Geschwindigkeit eines zweiten Kraftfahrzeugs (3) bestimmen kann, das vor dem ersten Kraftfahrzeug (1) auf derselben Fahrspur (4) und in derselben Fahrtrichtung (5) fährt, wobei der adaptive Geschwindigkeitsregler (2) **dadurch gekennzeichnet ist, dass** er einen Rechner umfasst, der konfiguriert ist für
- Berechnung des Gradienten der Differenz zwischen der Geschwindigkeit des zweiten Kraftfahrzeugs (3) und der Geschwindigkeit des ersten Kraftfahrzeugs (1);
- Glätten der ermittelten Geschwindigkeit des zweiten Kraftfahrzeugs (3) mit einem Glättungskoeffizienten, der dem berechneten Gradienten zugeordnet ist, wobei der adaptive Geschwindigkeitsregler (2) ausgebildet ist, um die Geschwindigkeit des ersten Kraftfahrzeugs (1) relativ zur geglätteten Geschwindigkeit zu regeln.

2. Adaptiver Geschwindigkeitsregler (2) nach dem vorhergehenden Anspruch, **dadurch gekennzeichnet, dass** der Glättungskoeffizient in Abhängigkeit von dem Gradienten abnimmt, sodass eine Glättung, die einem Absolutwert-niedrigeren Gradienten bei einem ersten Schwellenwert zugeordnet ist, größer ist als eine Glättung, die einem Absolutwert-höheren Gradienten bei dem ersten Schwellenwert zugeordnet ist.

3. Adaptiver Geschwindigkeitsregler (2) nach Anspruch 1 oder 2, **dadurch gekennzeichnet, dass** dann, wenn der berechnete Gradient in absoluten Werten größer als ein zweiter vorbestimmter Schwellenwert ist, der Glättungskoeffizient so gewählt wird, dass die geglättete Geschwindigkeit im Wesentlichen gleich der bestimmten Geschwindigkeit des zweiten Kraftfahrzeugs (3) ist.

4. Adaptiver Geschwindigkeitsregler (2) nach einem der vorhergehenden Ansprüche, **dadurch gekennzeichnet, dass** der Glättungskoeffizient durch eine affine Funktion pro vorgegebenem Intervall des Gradienten definiert ist.

5. Adaptiver Geschwindigkeitsregler (2) nach einem der vorhergehenden Ansprüche, **dadurch gekennzeichnet, dass** der Rechner so konfiguriert ist, dass er die bestimmte Geschwindigkeit des zweiten Kraftfahrzeugs (3) durch einen Gradientenbegrenzer glättet.

6. Verfahren zur adaptiven Geschwindigkeitsregelung eines ersten Kraftfahrzeugs (1), das die folgenden Schritte umfasst:
- Bestimmung der Geschwindigkeit eines zweiten Kraftfahrzeugs (3), das vor dem ersten Kraftfahrzeug (1) auf derselben Fahrspur (4) und in derselben Fahrtrichtung (5) unterwegs ist;
- Berechnung des Gradienten der Differenz zwischen der Geschwindigkeit des zweiten Kraftfahrzeugs (3) und der Geschwindigkeit des ersten Kraftfahrzeugs (1);
- Glätten der ermittelten Geschwindigkeit des zweiten Kraftfahrzeugs (3) mit einem Glättungskoeffizienten, der dem berechneten Gradienten zugeordnet ist;
- Geschwindigkeitsregelung des ersten Kraftfahrzeuges (1) gegenüber der geglätteten Geschwindigkeit.

7. Verfahren nach dem vorhergehenden Anspruch, **dadurch gekennzeichnet, dass** der Glättungskoeffizient in Abhängigkeit von dem Gradienten abnimmt, sodass eine Glättung, die einem Absolutwert-niedrigeren Gradienten bei einem ersten Schwellenwert zugeordnet ist, größer ist als eine Glättung, die einem Absolutwert-höheren Gradienten bei dem ersten Schwellenwert zugeordnet ist.

8. Verfahren nach Anspruch 6 oder 7, **dadurch gekennzeichnet, dass**, wenn der Gradient größer als ein zweiter vorbestimmter Schwellenwert ist, der Glättungskoeffizient so gewählt wird, dass die geglättete Geschwindigkeit im Wesentlichen gleich der bestimmten Geschwindigkeit des zweiten Kraftfahrzeugs (3) ist.

9. Verfahren nach einem der Ansprüche 6 bis 8, **dadurch gekennzeichnet, dass** der Glättungskoeffizient durch eine affine Funktion pro vorgegebenem Intervall des Gradienten definiert ist.

10. Kraftfahrzeug (1) mit einem adaptiven Geschwindigkeitsregler (2) nach einem der Ansprüche 1 bis 5.

## Claims

1. An adaptive speed regulator (2) for regulating the speed of a first motor vehicle (1), this adaptive speed regulator (2) being capable of determining the speed of a second motor vehicle (3) traveling in front of the first motor vehicle (1) on the same road (4) and in the same direction (5) of travel, the adaptive speed regulator (2) being **characterized in that** it comprises a computer configured to
- calculate the gradient of the difference between the speed of the second motor vehicle (3) and the speed of the first motor vehicle (1);
- smoothing the determined speed of the second motor vehicle (3) with a smoothing coefficient associated with the calculated gradient, the adaptive speed regulator (2) being configured to regulate the speed of the first motor vehicle (1) by report with the smoothed speed.

2. Adaptive cruise control (2) according to the previous claim, wherein the smoothing coefficient is decreasing as a function of said gradient so that a smoothing associated with a lower absolute value gradient than a first threshold value is greater than a smoothing associated with a higher absolute value gradient than said first threshold value.

3. Adaptive cruise control (2) according to claim 1 or 2, wherein, when the calculated gradient is greater in absolute value than a second predefined threshold value, the smoothing coefficient is chosen so that the smoothed speed is substantially equal to the determined speed of the second motor vehicle (3).

4. Adaptive cruise control (2) according to any one of the previous claims, wherein the smoothing coefficient is defined by an affine function per predefined interval of said gradient.

5. Adaptive cruise control (2) according to any one of the previous claims, wherein the computer is configured to smooth the determined speed of the second motor vehicle (3) by a gradient limiter.

6. Method for adaptively regulating the speed of a first motor vehicle (1) comprising the following steps:
- determining the speed of a second motor vehicle (3) traveling in front of the first motor vehicle (1) on a same road (4) and in a same direction (5) of traffic;
- compute of the gradient of the difference between the speed of the second motor vehicle (3) and the speed of the first motor vehicle (1);
- smoothing of the determined speed of the second motor vehicle (3) with a smoothing coefficient associated with the calculated gradient;
- regulation of the speed of the first motor vehicle (1) by report to the smoothed speed.

7. The method according to the previous claim, wherein the smoothing coefficient is decreasing as a function of said gradient so that a smoothing associated with a gradient lower in absolute value than a first threshold value is higher than a smoothing associated with a gradient higher in absolute value than said first threshold value.

8. Method according to claim 6 or 7, wherein, when the gradient is greater than a second predefined threshold value, the smoothing coefficient is chosen so that the smoothed speed is substantially equal to the determined speed of the second motor vehicle (3).

9. Method according to any one of claims 6 to 8, **characterized in that** the smoothing coefficient is defined by an affine function per predefined interval of the said gradient.

10. Motor vehicle (1) comprising an adaptive cruise control (2) according to any one of claims 1 to 5.
